# EUROPÄISCHE PATENTSCHRIFT

(11) **EP 4 295 934 B1**
(45) Veröffentlichungstag und Bekanntmachung des Hinweises auf die Patenterteilung: **09.07.2025**
(21) Anmeldenummer: 23173959.0
(22) Anmeldetag: 17.05.2023
(51) Int. Cl.: B01D 29/01, B29C 45/00

(54) **HAUSGERÄT MIT FILTERELEMENT UND VERFAHREN ZUR HERSTELLUNG DES FILTERELEMENTS MITTELS THERMOPLAST-SCHAUMSPRITZGIESSEN**
DOMESTIC APPLIANCE WITH FILTER ELEMENT AND METHOD FOR PRODUCING THE FILTER ELEMENT BY MEANS OF THERMOPLASTIC FOAM INJECTION MOULDING
APPAREIL MÉNAGER AVEC ÉLÉMENT FILTRANT ET PROCÉDÉ DE FABRICATION DE L'ÉLÉMENT FILTRANT PAR MOULAGE PAR INJECTION DE MOUSSE THERMOPLASTIQUE

(30) Priorität: 21.06.2022 DE 102022206163
(43) Veröffentlichungstag der Anmeldung: 27.12.2023
(73) Patentinhaber: BSH Hausgeräte GmbH, 81739 München (DE)
(72) Erfinder: Borger, Paul, 14480 Potsdam (DE); Piotrowski, Bartlomiej, 12279 Berlin (DE); Korte, Martin, 14612 Falkensee (DE); Theen-Vodegel, Cornelius, 10555 Berlin (DE); Lee, Linus, 16727 Oberkrämer (DE)

(56) Entgegenhaltungen:
- EP-A1- 3 342 576
- GB-A- 1 404 631
- JP-A- H07 323 438
- US-A1- 2017 056 791

## Beschreibung

Die Erfindung betrifft ein Hausgerät mit einem Filterelement und ein Verfahren zur Herstellung dieses Filterelementes mittels Thermoplast-Schaumspritzgießen.

Bei Hausgeräten werden für die Reinigung von verschiedenen Medien, insbesondere Luft, Wasser oder Mischungen mit festen Bestandteilen, Filter mit feinen Gitterstrukturen eingesetzt. Häufig werden dazu Gazen als Halbzeug aus Kunststoff oder Metall eingesetzt. Diese werden im Allgemeinen entweder an einem Rahmen montiert oder im Montagespritzgussverfahren (Overmolding) gefertigt. Alternativ zum Montagespritzgussverfahren ist es möglich, eine Gitterstruktur direkt im Spritzguss abzubilden.

So beschreibt die Veröffentlichung WO 2007/074087 A1 gemäß Anspruch 1 eine Gitterstruktur für den Durchtritt eines ersten Mediums gegen ein zweites Medium mit Querstegen und Längsstegen, die miteinander einen Winkel β zwischen 80°und 100° bilden, wobei zwischen den Querstegen und Längsstegen Gitteröffnungen mit einer lichten Weite ≤ 300 µm angeordnet sind. Hierbei weisen auf mindestens einer Seite der Gitterstruktur die Querstege und/oder die Längsstege eine Rippenanordnung aus senkrecht zur Gitterebene aufragenden Rippen auf, wobei mindestens eine erste Gruppe und eine zweite Gruppe von Rippen vorgesehen sind, die sich mindestens durch ihre Rippenhöhen H₁, H₂ mit H_{4 >} H₂ unterscheiden. Das Gitter wird in Hinblick auf die Aufbereitung von Trinkwasser beschrieben. Andere Filter sind in JP H07 323438 A, GB 1 404 631 A, EP 3 342 576 A1 und US 2017/056791 A1 offenbart.

Aufgabe der Erfindung war vor diesem Hintergrund die Bereitstellung eines verbesserten Verfahrens zur Herstellung eines Filterelementes, wobei die Herstellung möglichst in einem einzigen Prozess realisierbar sein sollte. Das Filterelement sollte insbesondere zur Anwendung in einem Hausgerät geeignet sein. Außerdem sollte ein Hausgerät bereitgestellt werden, bei dem ein solches Filterelement Anwendung findet.

Erfindungsgemäß werden diese Aufgaben durch ein Hausgerät mit einem Filterelement und ein Verfahren zur Herstellung dieses Filterelementes mittels Thermoplast-Schaumspritzgießen mit den Merkmalen der unabhängigen Ansprüche gelöst. Vorteilhafte Ausgestaltungen des erfindungsgemäßen Verfahrens und des erfindungsgemäßen Hausgerätes sind in den Unteransprüchen aufgeführt. Vorteilhafte Ausgestaltungen des erfindungsgemäßen Hausgeräts entsprechen vorteilhaften Ausgestaltungen des erfindungsgemäßen Verfahrens und umgekehrt, selbst wenn hierin nicht explizit darauf hingewiesen wird.

Gegenstand der Erfindung ist somit ein Hausgerät mit einem einstückigen Filterelement aus einem Kunststoffmaterial, wobei das einstückige Filterelement einen von einem Rahmen umgebenen Filter mit einer runden Kontur aufweist und das einstückige Filterelement durch Thermoplast-Schaumspritzgießen einer treibmittelhaltigen Schmelze eines thermoplastischen Kunststoffes erhältlich ist.

Bevorzugt ist ein Hausgerät, bei dem das Thermoplast-Schaumspritzgießen so durchgeführt wird, dass die treibmittelhaltige Schmelze zunächst vollständig den Filter bildet, bevor anschließend der Rahmen mit der treibmittelhaltigen Kunststoffschmelze gebildet wird. Hierzu ist eine Gitterstruktur des Filters im Allgemeinen so ausgestaltet, dass die runde Kontur den simultanen Austritt der Schmelze aus dem Gitterbereich in den Rahmenbereich sicherstellt.

In einer ganz besonders bevorzugten Ausführungsform des Hausgerätes weist der Filter eine Gitterstruktur mit zwei Gruppen von jeweils parallelen Gitterlinien auf. Hierbei ist es bevorzugt, dass sich die zwei Gruppen von jeweils parallelen Gitterlinien in einem Winkel α von im Wesentlichen 90° , vorzugsweise 90°, schneiden.

Überdies ist dabei ein Hausgerät bevorzugt, bei dem die beiden Gitterlinien jeweils Stege mit einem Stegabstand A im Bereich von 0,05 bis 0,5 mm, vorzugsweise im Bereich von 0,1 bis 0,3 mm, einer Stegbreite B im Bereich von 0,2 bis 1 mm, vorzugsweise im Bereich von 0,3 bis 0,7 und einer Steghöhe C im Bereich von 0,3 bis 1,5 mm, vorzugsweise im Bereich von 0,4 bis 1 mm sind. Hierbei ist zu beachten, dass sich zwei Steghöhen C herstellungsbedingt auf beiden Seiten einer Trennfuge befinden. Eine Trennfuge ist beim Spritzgießen von Formen die Grenzlinie, in der die Entformungsschrägen die Richtung ändern.

Im erfindungsgemäßen Hausgerät ist die runde Kontur vorzugsweise ein abgerundetes Rechteck mit konvexen Ecken. Dabei sind die Seitenlinien im Allgemeinen so gebogen, dass sich eine kontinuierliche runde Kontur ergibt. Die Seitenlinien des Rechtecks können gleich lang sein, so dass die Kontur beispielsweise auch ein Kreis sein kann.

In einer ganz besonders bevorzugten Ausführungsform des erfindungsgemäßen Hausgerätes hat der Filter in einer ersten Richtung eine maximale Abmessung dₘₐₓ und in einer zweiten Richtung eine minimale Abmessung dₘᵢₙ < dₘₐₓ, wobei die erste Richtung und die zweite Richtung einen Winkel β im Bereich von 40° bis 50°, vorzugsweise im Bereich von 43° bis 47° und ganz besonders bevorzugt einen Winkel β von 45° bilden.

Bei einem solchen Hausgerät ist es bevorzugt, dass die erste Richtung im Wesentlichen parallel ist zu einer Gruppe von parallelen Gitterlinien einer Gitterstruktur des Filters.

Der thermoplastische Kunststoff ist erfindungsgemäß nicht eingeschränkt, sofern er für das Thermoplast-Schaumspritzgießen und eine Anwendung in einem Filterelement geeignet ist. Vorzugsweise ist der thermoplastische Kunststoff Polypropylen. Geeignete Treibmittel für Polypropylen sind dem Fachmann bekannt.

Das Hausgerät ist erfindungsgemäß nicht eingeschränkt. Dementsprechend können im Hausgerät unterschiedliche Fluide verwendet werden, wie beispielsweise Luft und/oder Wasser. Dabei wird das Filterelement hinsichtlich der genauen Ausgestaltung und Größe von dem zu reinigenden Fluid abhängig sein.

Erfindungsgemäß bevorzugt handelt es sich beim Hausgerät um einen Trockner oder Waschtrockner und das Filterelement darin ist ein Flusenfilter.

Gegenstand der Erfindung ist außerdem ein Verfahren zur Herstellung eines einstückigen Filterelementes aus einem Kunststoffmaterial für ein Hausgerät, wobei das einstückige Filterelement einen von einem Rahmen umgebenen Filter mit einer runden Kontur aufweist und das einstückige Filterelement durch Thermoplast-Schaumspritzgießen einer treibmittelhaltigen Schmelze eines thermoplastischen Kunststoffes erhältlich ist, wobei das Verfahren die Schritte
(a) Bestimmung der runden Kontur und des Ortes einer Zuführungsöffnung für die treibmittelhaltige Schmelze, wobei die runde Kontur und der Ort der Zuführungsöffnung so auf die Schmelze des thermoplastischen Kunststoffes abgestimmt werden, dass die Zuführung der Schmelze von einem Filterteil in einen Rahmenteil eines Spritzgießwerkzeugs im Wesentlichen gleichzeitig, vorzugsweise gleichzeitig, erfolgen kann;
(b) Bereitstellen eines die bestimmte runde Kontur und den bestimmten Ort einer Zuführungsöffnung für die treibmittelhaltige Schmelze abbildenden, zwei Werkzeughälften aufweisenden, reversibel verschließbaren Spritzgießwerkzeuges, in dem die beiden Werkzeughälften den Filterteil für die Herstellung des Filters und den Rahmenteil für die Herstellung des Rahmens aufweisen und eine abgesehen von der im Filterteil des Werkzeugs angeordneten Zuführungsöffnung abgeschlossene Kavität bilden, dessen äußere Abmessungen im Wesentlichen denen des Filterelementes entsprechen;
(c) Einführen an der Zuführungsöffnung des Spritzgießwerkzeuges der treibmittelhaltigen Schmelze des thermoplastischen Kunststoffes;
(d) Kontinuierliches weiteres Zuführen der treibmittelhaltigen Schmelze des thermoplastischen Kunststoffes in einer Menge, die aufgrund der aufschäumenden Wirkung des Treibmittels und der allmählichen Abkühlung der Schmelze ausreicht, um das Werkzeug vollständig mit dem Kunststoffmaterial zu füllen; und
(e) Unter Öffnen der beiden Werkzeughälften Entformen und Auswerfen des Filterelementes aus beiden Werkzeughälften
aufweist.

Die Bestimmung im Schritt (a) dient dazu, sicherzustellen, dass der Druckbedarf für das Fliesen der Schmelze durch die Gitterstruktur hindurch gleich ist, so dass jeder Fließweg der treibmittelhaltigen Schmelze gleich ist und somit insbesondere auch die jeweiligen Druckverluste auf dem Fließweg gleich sind. Dies bedeutet im Allgemeinen, dass der Ort der Zuführungsöffnung so ausgewählt wird, dass er eine drucktechnische Mitte darstellt.

In einer bevorzugten Ausführungsform dieses Verfahrens erfolgt die Bestimmung der runden Kontur und des Ortes einer Zuführungsöffnung für die treibmittelhaltige Schmelze im Schritt (a) durch Simulation des Fließverhaltens der Schmelze unter Berücksichtigung der Art der treibmittelhaltigen Schmelze und seiner Viskosität sowie der Ausgestaltung der Gitterstruktur erfolgt.

Erfindungsgemäß ist überdies ein Verfahren bevorzugt, bei dem zur Berücksichtigung der Ausgestaltung der Gitterstruktur davon ausgegangen wird, dass sich in der Gitterstruktur zwei Gruppen von jeweils parallelen Gitterlinien in einem Winkel α von im Wesentlichen 90° schneiden und die beiden Gitterlinien jeweils Stege mit einem Stegabstand A im Bereich von 0,05 bis 0,5 mm, einer Stegbreite B im Bereich von 0,2 bis 1 mm und einer Steghöhe C im Bereich von 0,3 bis 1,5 mm sind.

Die Herstellung des einstückigen Filterelementes erfolgt erfindungsgemäß im Allgemeinen durch Thermoplast-Schaumspritzgießen (TSG). Das TSG ermöglicht die Herstellung eines Trägerrahmens einer Filterstruktur und der Filterstruktur selbst ohne zusätzliches Spritzgießaggregat oder Angusspunkt.

Beim TSG wird ein Treibmittel eingesetzt, um ein Aufschäumen der Schmelze zu erreichen. Es gibt gasförmige Treibmittel, z.B. Stickstoff und/oder Kohlendioxid, d.h. physikalische Treibmittel, aber auch in flüssiger/fester Form eingesetzte Treibmittel, die beispielsweise als Pulver oder Masterbatches erhältlich sind. Bei letzteren, d.h. chemischen Treibmitteln, werden im Allgemeinen durch die thermische Zersetzung des Treibmittels gasförmige Bestandteile erzeugt. Geeignete chemische Treibmittel sind beispielsweise Natriumhydrogencarbonat oder Zitronensäurederivate.

Die Wirkungsweise physikalischer Treibmittel unterscheidet sich von der chemischer Treibmittel dadurch, dass keine Zersetzungsreaktion stattfindet, weshalb Zersetzungsrückstände wie sie beim Einsatz chemischer Treibmittel prinzipiell anfallen können, entfallen.

Zum Beladen der thermoplastischen Polymeren mit physikalischen Treibmitteln, also mit Gasen, kann beispielsweise der thermoplastischen Kunststoffschmelze eines der inerten Gase Stickstoff oder Kohlendioxid zugesetzt werden, um sie dann beispielsweise im Schmelzzylinder zu einer Einphasenlösung zu mischen. Diese Einphasenlösung wird dann bei dieser Ausführungsform in das Spritzgießwerkzeug eingeführt.

Das Treibmittel kann auch auf unterschiedliche Weise eingebracht werden. So kann der thermoplastische Kunststoff noch im Festkörperzustand unter eine Treibmittelatmosphäre gesetzt werden, indem zwischen Materialtrichter und Plastifizieraggregat eine Druckkammerschleuse installiert wird. Der Kunststoff wird darin durch Diffusions- und Mischvorgänge mit dem Treibgas beladen.

In einer bevorzugten Ausführungsform des Verfahrens wird das Treibmittel in einer Menge von 0,5 bis 6 Gew.-%, bezogen auf die treibmittelhaltige Schmelze, verwendet.

Es können beliebige Polymer-Treibmittel-Kombinationen benutzt werden, solange das erfindungsgemäße Verfahren durchführbar ist und das im erfindungsgemäßen Hausgerät eingesetzte Filterelement hergestellt werden kann. Dabei ist im Allgemeinen die Verfahrensführung den verwendeten Materialien anzupassen.

Die Treibmittel haben einen großen Einfluss auf das Spritzgussverfahren und damit das hergestellte Filterelement. Überdies können noch zum Erzielen optimaler Ergebnisse Ort und Zeitpunkt der Zugabe des Treibmittels variiert werden, beispielsweise durch Zugabe an einer ausgewählten Stelle in einem zum Aufschmelzen des thermoplastischen Kunststoffes verwendeten Schneckenextruder. Die Auswahl des thermoplastischen Kunststoffs erfordert, dass z.B. in Abhängigkeit von dessen Erweichungs-/Schmelzpunkt ein geeignetes Treibmittel in geeigneter Menge und zu einem geeigneten Zeitpunkt eingebracht werden muss. Vorteilhaft kann bei der Durchführung des erfindungsgemäßen Verfahrens darauf geachtet werden, dass das Treibmittel so spät wie möglich wirkt, damit die Formteiloberflächen durch den Schäumeffekt während des Füllens des Werkzeugs möglichst wenig gestört werden. Häufig werden bessere Formteiloberflächen erzielt, wenn das Werkzeug schon gefüllt ist, bevor der Schäumvorgang richtig einsetzt. Man arbeitet daher bisweilen mit Verzögerungszeiten für den Dosiervorgang. Das ist bei manchen Treibmitteln (insbesondere chemischen Treibmitteln) vorteilhaft, weil diese dann nicht unnötig lange hohen Temperaturen ausgesetzt werden, die zu einem Abbau führen könnten.

Beim erfindungsgemäßen Verfahren ergibt sich im Allgemeinen ein fließender Übergang des Filters in den zum Tragen des Filters notwendigen Rahmen. Generell wird eine gleichmäßige Struktur des Filterelementes erhalten.

Es hat sich zudem gezeigt, dass das erfindungsgemäße Verfahren vorteilhaft dadurch ausgeführt werden kann, dass keine zusätzliche Temperiereinrichtung (z.B. Variotherm) eingesetzt wird. Dies ist trotz der vergleichsweise dünnen Strukturen möglich. Es reicht die Standardkühlung des Spritzgießwerkzeugs.

Für die erfindungsgemäße Durchführung des TSG sind keine speziellen Schnecken erforderlich. Es können insbesondere Standardschnecken eingesetzt werden.

Um dünne Gitterstrukturen im Spritzgießverfahren zu füllen, sollte der Angusspunkt möglichst in der Mitte der Gitterstruktur positioniert sein, wobei die genaue Festlegung aber im Allgemeinen so vorgenommen wird, dass die Zuführungsöffnung (auch als Angusspunkt bezeichnet) eine drucktechnische Mitte darstellt, von der ausgehend die Druckverluste in der Gitterstruktur bis zum Erreichen des Rahmenteils gleich sind, so dass der Gitterteil gleichzeitig gefüllt wird. Der benötigte Fülldruck zum Füllen des Spritzgussbauteils ist im Allgemeinen hoch.

Erfindungsgemäß nutzt man mit der Verwendung der Thermoplast-Schaumspritzgießtechnologie allerdings zwei Vorteile gegenüber der herkömmlichen Spritzgießtechnik. Der Schmelze wird im Allgemeinen in der Spritzgießmaschine ein Treibmittel zugeführt. Während der Füllphase der Kavität im Werkzeug lässt sich mit dem Einbringen von Gas in die Schmelze die Viskosität der Schmelze reduzieren. Es lässt sich somit der Fließwiderstand in der dünnen Filterstruktur durch Verwendung der treibmittelhaltigen Polymerschmelze reduzieren. Der benötigte Fülldruck sinkt. Durch das schnelle Einfüllen der treibmittelhaltigen Polymerschmelze durch den Filter kann ebenfalls eine vollständige Füllung des Rahmens durch die Wirkung des Gasdrucks realisiert werden. Durch das Durchdringen der Filterstruktur findet die Expansion erst im Rahmen (Trägerrahmen) statt. Nach der Füllphase trägt das Gas als Treibmittel zur Verringerung der Schwindung des Filterelementes in den dickeren angussfernen Bereichen bei und beugt Einfallstellen und Verzug vor. Eine Nachdruckphase ist bei der Schaumspritzgießtechnologie in der Regel nicht notwendig, da das gelöste Gas in noch flüssigen Bereichen der Kavität nukleiert und zu kleinen Bläschen anwächst und somit die abkühlbedingte Schwindung der Schmelze ausgleicht.

Die Erfindung hat zahlreiche Vorteile. Filterelemente mit integrierten, dünnen und großflächigen Gitterstrukturen in einem Trägerrahmen lassen sich in einem Prozess und mit einem Angusspunkt herstellen. Es lassen sich Kosten sparen durch die Verringerung der Menge an eingesetztem Material sowie aufgrund der Energieersparnis, die durch den Einsatz eines niedrigeren Drucks und einer niedrigeren Zuhaltekraft des Werkzeugs möglich sind. Darüber hinaus ist die Komplexität des Verfahrens geringer, da nur ein Prozessschritt und ein Angusspunkt erforderlich sind. Die Zykluszeit kann reduziert werden und es kann eine vergleichsweise kleine Spritzgießmaschine verwendet werden.

Schließlich kann auch ein verbessertes Filterelement erhalten werden. Es kann eine feine Gitterstruktur erhalten werden, die trotz der Verwendung des Thermoplast-Schaumspritzgießens kaum geschwächt ist. Durch die Verbesserung der Fließfähigkeit verglichen mit einer herkömmlichen Polymerschmelze ist eine Füllung dünnerer und großflächigerer Gitter möglich. Die Möglichkeit, feinere Gitterstrukturen zu realisieren, kann das Verhältnis von offener zu geschlossener Siebfläche erhöhen und weitere Filteranwendungen ermöglichen. Außerdem ermöglicht die Erfindung die Reduzierung oder Vermeidung von kalten Fließfronten und somit Bindenähten außerhalb der Gitters.

Weitere Einzelheiten der Erfindung ergeben sich aus der nachfolgenden Beschreibung von nicht einschränkend zu interpretierenden Ausführungsformen. Hierbei wird Bezug genommen auf die Figuren 1 bis 5.
Figur 1 zeigt eine Draufsicht auf ein erfindungsgemäß eingesetztes Filterelement gemäß einer ersten Ausführungsform eines erfindungsgemäßen Hausgerätes.
Figur 2 zeigt eine Draufsicht auf ein erfindungsgemäß eingesetztes Filterelement 1 gemäß einer weiteren Ausführungsform eines erfindungsgemäßen Hausgerätes, bei dem im Vergleich zu Fig. 1 die Gitterstruktur 4 aus Gründen der Anschaulichkeit stark vergrößert gezeigt ist.
Fig. 3 zeigt eine Seitenansicht eines erfindungsgemäß eingesetzten Filterelementes in verschiedenen Vergrößerungsstufen, die von Fig. 3 (a) bis Fig. 3 (c) zunehmen.
Figur 4 zeigt eine Schnittansicht des Filterelements von Figur 1 entlang der Schnittlinie A-A von Figur 1.
Figur 5 zeigt eine vergrößerte Ansicht des in Figur 4 gekennzeichneten Bereiches B des Filterelements, in welchem insbesondere der Übergangsbereich zwischen Filter und Rahmenteil gezeigt ist.

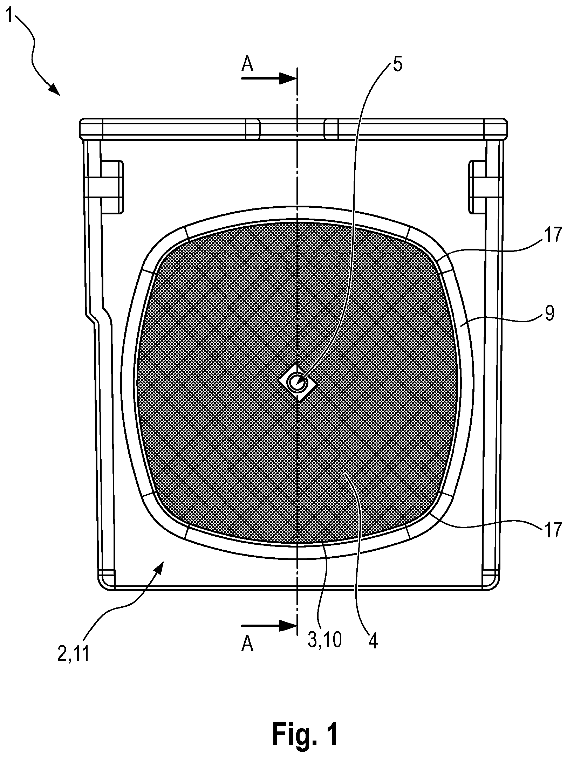

Fig. 1 zeigt eine Draufsicht auf ein erfindungsgemäß eingesetztes Filterelement 1 gemäß einer ersten Ausführungsform eines erfindungsgemäßen Hausgerätes. Filterelement 1 wird insbesondere durch das erfindungsgemäße Verfahren hergestellt. Das Filterelement 1 beinhaltet einen Filter 3 in der Form, d.h. mit der Kontur, eines abgerundeten Rechteckes mit konvexen Ecken 17. Dem Filter 3 entspricht in dem hier nicht gezeigten Werkzeug der Filterteil 10. Der Filter 3 ist von einem Rahmen 2 umgeben, dem in dem hier nicht gezeigten Werkzeug der Rahmenteil 11 entspricht.

Das einstückige Filterelement 1 besteht in dieser Ausführungsform aus Polypropylen als thermoplastischem Polymer. Zur Herstellung wurde ein chemisches Treibmittel verwendet, dessen daraus entstandenes Gas im Filterelement in Form unterschiedlich großer Bläschen (hier nicht sichtbar) enthalten ist. 5 bedeutet eine Zuführungsöffnung für die Einleitung der treibmittelhaltigen Polypropylenschmelze. 4 bedeutet die hier nicht näher erkennbare Gitterstruktur von Filter 3, in der zwei Gruppen von jeweils parallelen Gitterlinien sich in einem Winkel von im Wesentlichen 90° schneiden.

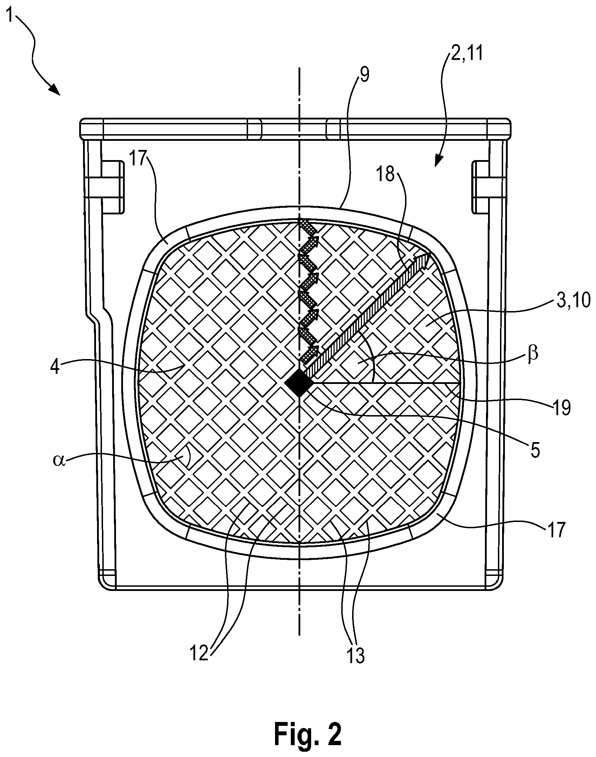

Fig. 2 zeigt eine Draufsicht auf ein erfindungsgemäß eingesetztes Filterelement 1 gemäß einer weiteren Ausführungsform eines erfindungsgemäßen Hausgerätes, bei dem im Vergleich zu Fig. 1 die Gitterstruktur 4 aus Gründen der Anschaulichkeit stark vergrößert gezeigt ist. Filterelement 1 wird auch hier durch das erfindungsgemäße Verfahren hergestellt. Das Filterelement 1 beinhaltet einen Filter 3 in der Form, d.h. mit der Kontur, eines abgerundeten Rechteckes mit konvexen Ecken 17. Dem Filter 3 entspricht in dem hier nicht gezeigten Werkzeug der Filterteil 10. Der Filter 3 ist von einem Rahmen 2 umgeben, dem in dem hier nicht gezeigten Werkzeug der Rahmenteil 11 entspricht. Das einstückige Filterelement 1 besteht auch bei dieser Ausführungsform aus thermoplastischem Polypropylen. Zur Herstellung wurde ein chemisches Treibmittel verwendet. 5 bedeutet eine Zuführungsöffnung für die Einleitung der treibmittelhaltigen Polypropylenschmelze.

Die Gitterstruktur 4 besteht aus zwei Gruppen (12 bzw. 13) von jeweils parallelen Gitterlinien, die sich in einem Winkel α von 90° schneiden.

Der Filter 3 hat in einer ersten Richtung 18 eine maximale Abmessung dₘₐₓ und in einer zweiten Richtung 19 eine minimale Abmessung dₘᵢₙ < dₘₐₓ, wobei die erste Richtung 18 und die zweite Richtung 19 bei dieser Ausführungsform einen Winkel β von 45° bilden.

Bei der hier gezeigten Ausführungsform eines erfindungsgemäßen Hausgerätes ist die erste Richtung 18 parallel ist zu der Gruppe von parallelen Gitterlinien 13 der Gitterstruktur 4 von Filter 1.

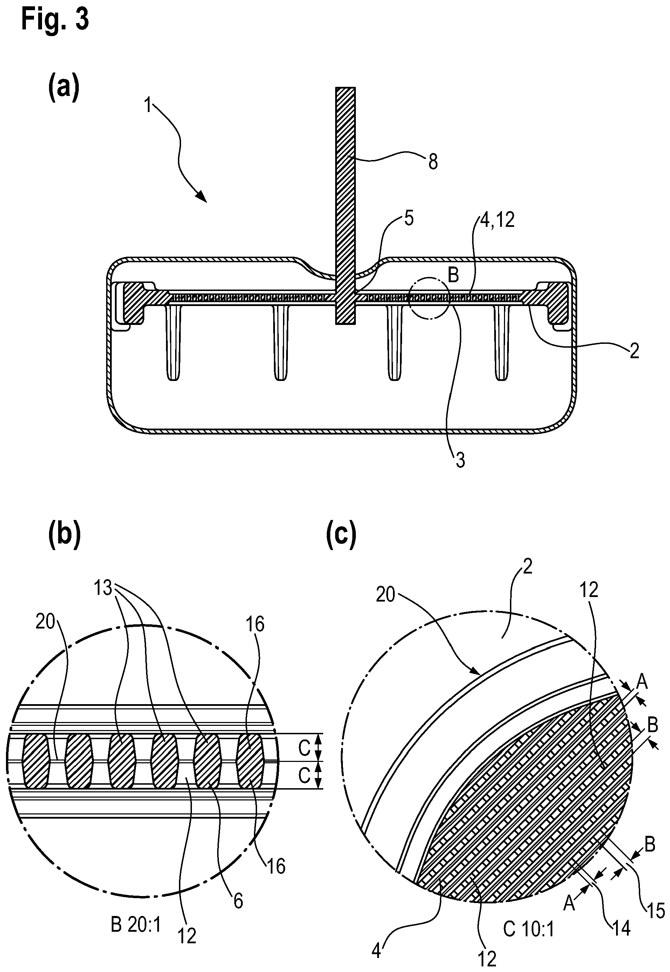

Fig. 3 zeigt eine Seitenansicht eines erfindungsgemäß eingesetzten Filterelementes in verschiedenen Vergrößerungsstufen, die von Fig. 3 (a) bis Fig. 3 (c) zunehmen.

Bei der in Fig. 3 (a) gezeigten Seitenansicht eines erfindungsgemäß eingesetzten Filterelementes 1 sind der Filter 3 und der ihn umgebende Rahmen 2 sichtbar. Die Filterstruktur 4 bzw. eine Gitterlinie 12 ist grob erkennbar. 5 bedeutet eine Zuführungsöffnung für die treibmittelhaltige Schmelze eines thermoplastischen Kunststoffes und 8 einen entsprechenden Zuführungsanguss.

Fig. 3 (b) zeigt einen um den Faktor 20 vergrößerten kreisförmigen Ausschnitt B an der in Fig. 3 (a) mit B gekennzeichneten Stelle. Gezeigt ist eine Gitterlinie 12. Deutlich erkennbar sind die Stege 6 von die Gitterlinie 12 in der Figurebene kreuzenden hierzu senkrecht angeordneten Gitterlinien 13 zu erkennen. Durch die beiden jeweils eine Steghöhe C aufweisenden Stegteile verläuft eine Trennfuge 20.

Fig. 3 (c) zeigt eine um den Faktor 10 vergrößerte Draufsicht auf einen Übergangsbereich zwischen Filterstruktur 4 und Rahmen 2 von Fig. 3 (a). Erkennbar sind eine Trennfuge 20 sowie Gitterlinien 12. Bei dieser Figur ist die Bedeutung des Stegabstandes A 14 und der Stegbreite B 15 illustriert.

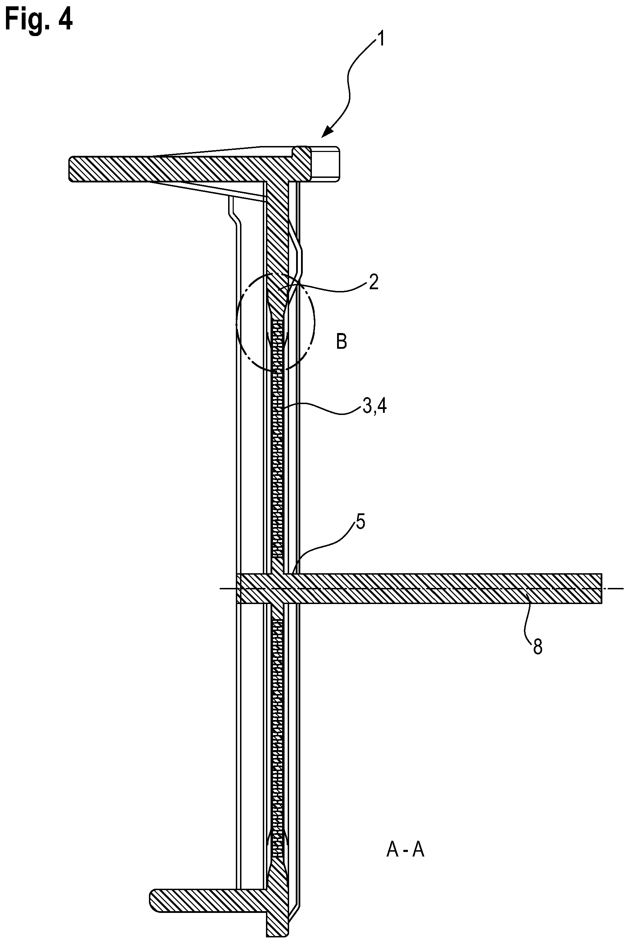

Fig. 4 zeigt eine Schnittansicht des Filterelements 1 von Figur 1 entlang der Schnittlinie A-A von Figur 1. An der Zuführungsöffnung 5 ist ein Zuführungsanguß 8 für die treibmittelhaltige Schmelze des thermoplastischen Kunststoffes, hier Polypropylen, angeordnet. Ein durch eine Ellipse B hervorgehobener Bereich von Filterelement 1 enthält einen Teil des Filters 3 und des den Filter umgebenden Rahmens 2. 4 bedeutet die Gitterstruktur

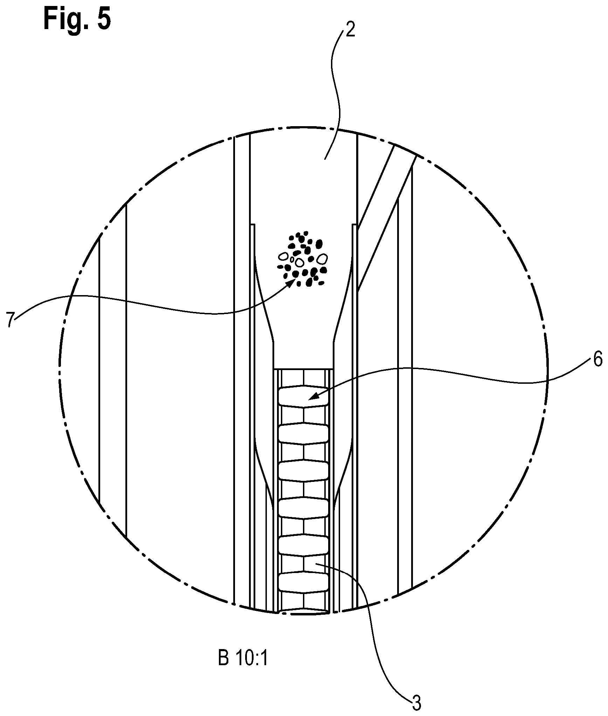

Figur 5 zeigt eine vergrößerte Ansicht des in Figur 4 gekennzeichneten Bereiches B des Filterelements, in welchem insbesondere der Übergangsbereich zwischen Filter 3 und Rahmen 2 gezeigt ist. Deutlich erkennbar ist hier, dass die Gasblasen in den Stegen 6 von Filter 3 kaum vorhanden sind und die Gasblasen 7 im Wesentlichen im Rahmen 2 auftreten.

### Bezugszeichen

- 1: Filterelement
- 2: Rahmen
- 3: Filter
- 4: Gitterstruktur
- 5: Zuführungsöffnung
- 6: Stege (der Gitterstruktur)
- 7: Glasblasen im Rahmen
- 8: Zuführungsanguss für die treibmittelhaltige Schmelze des thermoplastischen Kunststoffes
- 9: Runde Kontur
- 10: Gitterteil des Werkzeugs
- 11: Rahmenteil des Werkzeugs
- 12: Erste Gruppe von parallelen Gitterlinien, Stegen
- 13: Zweite Gruppe von parallelen Gitterlinien, Stegen
- 14: Stegabstand A
- 15: Stegbreite B
- 16: Steghöhe C
- 17: Konvexe Ecken der runden Kontur
- 18: Erste Richtung des Filters; Richtung der maximalen Abmessung dₘₐₓ
- 19: Zweite Richtung des Filters; Richtung der minimalen Abmessung dₘᵢₙ
- 20: Trennfuge

## Patentansprüche

1. Verfahren zur Herstellung eines einstückigen Filterelementes (1) aus einem Kunststoffmaterial für ein Hausgerät, wobei das einstückige Filterelement (1) einen von einem Rahmen (2) umgebenen Filter (3) mit einer runden Kontur (9) aufweist und das einstückige Filterelement (1) durch Thermoplast-Schaumspritzgießen einer treibmittelhaltigen Schmelze eines thermoplastischen Kunststoffes erhältlich ist, **gekennzeichnet durch** die Schritte
(a) Bestimmung der runden Kontur (9) und des Ortes einer Zuführungsöffnung (5) für die treibmittelhaltige Schmelze, wobei die runde Kontur (9) und die Zuführungsöffnung (5) so auf die Schmelze des thermoplastischen Kunststoffes abgestimmt werden, dass die Zuführung der Schmelze von einem Filterteil (10) in einen Rahmenteil (11) eines Spritzgießwerkzeugs im Wesentlichen gleichzeitig erfolgen kann;
(b) Bereitstellen eines die bestimmte runde Kontur (9) und den bestimmten Ort einer Zuführungsöffnung (5) für die treibmittelhaltige Schmelze abbildenden, zwei Werkzeughälften aufweisenden, reversibel verschließbaren Spritzgießwerkzeuges (10,11), in dem die beiden Werkzeughälften den Filterteil (10) für die Herstellung des Filters (1) und den Rahmenteil (11) für die Herstellung des Rahmens (2) aufweisen und eine abgesehen von der im Filterteil (10) des Werkzeugs angeordneten Zuführungsöffnung (5) abgeschlossene Kavität bilden, dessen äußere Abmessungen im Wesentlichen denen des Filterelementes (1) entsprechen;
(c) Einführen an der Zuführungsöffnung (5) des Spritzgießwerkzeuges (10,11) der treibmittelhaltigen Schmelze des thermoplastischen Kunststoffes;
(d) Kontinuierliches weiteres Zuführen der treibmittelhaltigen Schmelze des thermoplastischen Kunststoffes in einer Menge, die aufgrund der aufschäumenden Wirkung des Treibmittels und der allmählichen Abkühlung der Schmelze ausreicht, um das Werkzeug vollständig mit dem Kunststoffmaterial zu füllen; und
(e) Unter Öffnen der beiden Werkzeughälften Entformen und Auswerfen des Filterelementes (1) aus beiden Werkzeughälften.

2. Verfahren nach Anspruch 1, **dadurch gekennzeichnet, dass** die Bestimmung der runden Kontur (9) und des Ortes einer Zuführungsöffnung (5) für die treibmittelhaltige Schmelze im Schritt (a) durch Simulation des Fließverhaltens der Schmelze unter Berücksichtigung der Art der treibmittelhaltigen Schmelze und seiner Viskosität sowie der Ausgestaltung der Gitterstruktur (4) erfolgt.

3. Verfahren nach Anspruch 2, **dadurch gekennzeichnet, dass** zur Berücksichtigung der Ausgestaltung der Gitterstruktur davon ausgegangen wird, dass sich in der Gitterstruktur zwei Gruppen (12,13) von jeweils parallelen Gitterlinien in einem Winkel α von im Wesentlichen 90° schneiden und die beiden Gitterlinien (12,13) jeweils Stege mit einem Stegabstand A (14) im Bereich von 0,05 bis 0,5 mm, einer Stegbreite B (15) im Bereich von 0,2 bis 1 mm und einer Steghöhe C (16) im Bereich von 0,3 bis 1,5 mm sind.

4. Verfahren nach einem der Ansprüche 1 bis 3, **dadurch gekennzeichnet, dass** das Treibmittel in einer Menge von 0,5 bis 6 Gew.-%, bezogen auf die treibmittelhaltige Schmelze, verwendet wird.

5. Verfahren nach einem der Ansprüche 1 bis 4, **dadurch gekennzeichnet, dass** keine Temperiereinrichtung eingesetzt wird.

6. Hausgerät mit einem einstückigen Filterelement (1) hergestellt mit dem Verfahren nach mindestens einem der Ansprüche 1-5 aus einem Kunststoffmaterial, wobei das einstückige Filterelement (1) einen von einem Rahmen (2) umgebenen Filter (3) mit einer runden Kontur (9) aufweist und das einstückige Filterelement (1) durch Thermoplast-Schaumspritzgießen einer treibmittelhaltigen Schmelze eines thermoplastischen Kunststoffes erhältlich ist.

7. Hausgerät nach Anspruch 6, **dadurch gekennzeichnet, dass** das Thermoplast-Schaumspritzgießen so durchgeführt wird, dass die treibmittelhaltige Schmelze zunächst vollständig den Filter (3) bildet, bevor anschließend der Rahmen (2) mit der treibmittelhaltigen Kunststoffschmelze gebildet wird.

8. Hausgerät nach Anspruch 6 oder 7, **dadurch gekennzeichnet, dass** der Filter (3) eine Gitterstruktur (4) mit zwei Gruppen (12,13) von jeweils parallelen Gitterlinien aufweist,

9. Hausgerät nach Anspruch 8, **dadurch gekennzeichnet, dass** sich die zwei Gruppen (12,13) von jeweils parallelen Gitterlinien in einem Winkel α von im Wesentlichen 90° schneiden.

10. Hausgerät nach Anspruch 8 oder 9, **dadurch gekennzeichnet, dass** die Gitterlinien (12,13) der beiden Gruppen jeweils Stege mit einem Stegabstand A (14) im Bereich von 0,05 bis 0,5 mm, einer Stegbreite B (15) im Bereich von 0,2 bis 1 mm und einer Steghöhe C (16) im Bereich von 0,3 bis 1,5 mm sind.

11. Hausgerät nach einem der Ansprüche 6 bis 10, **dadurch gekennzeichnet, dass** die runde Kontur (9) ein abgerundeten Rechteck mit konvexen Ecken (17) ist.

12. Hausgerät nach einem der Ansprüche 6 bis 11, **dadurch gekennzeichnet, dass** der Filter (3) in einer ersten Richtung (18) eine maximale Abmessung dₘₐₓ und in einer zweiten Richtung (19) eine minimale Abmessung dₘᵢₙ < dₘₐₓ hat, wobei die erste Richtung (18) und die zweite Richtung (19) einen Winkel β im Bereich von 40° bis 50° bilden.

13. Hausgerät nach Anspruch 12, **dadurch gekennzeichnet, dass** die erste Richtung (18) im Wesentlichen parallel ist zu einer Gruppe von parallelen Gitterlinien (12,13) einer Gitterstruktur (4) des Filters (3).

14. Hausgerät nach einem der Ansprüche 6 bis 13, **dadurch gekennzeichnet, dass** der thermoplastische Kunststoff Polypropylen ist.

15. Hausgerät nach einem der Ansprüche 6 bis 14, **dadurch gekennzeichnet, dass** es sich um einen Trockner oder Waschtrockner handelt und darin das Filterelement (1) ein Flusenfilter ist.

## Claims

1. Method for producing a single-piece filter element (1) from a plastic material for a household appliance, wherein the single-piece filter element (1) has a filter (3) surrounded by a frame (2) with a round contour (9) and the single-piece filter element (1) is obtainable by way of thermoplastic foam injection moulding a melt, containing a propellant, of a thermoplastic, **characterised by** the steps
(a) determining the round contour (9) and the location of a feed aperture (5) for the melt containing a propellant, wherein the round contour (9) and the feed aperture (5) are adjusted to the melt of the thermoplastic such that the feeding of the melt from a filter part (10) into a frame part (11) of an injection moulding tool can take place essentially at the same time;
(b) providing an injection moulding tool (10, 11) having two tool halves which is reversibly closable and represents the determined round contour (9) and the determined location of a feed opening (5) for the melt containing a propellant, in which tool the two tool halves have the filter part (10) for the production of the filter (1) and the frame part (11) for the production of the frame (2) and form a cavity which is closed with the exception of the feed opening (5) arranged in the filter part (10) of the tool, the outer dimensions of which essentially correspond to those of the filter element (1);
(c) introducing the melt of the thermoplastic containing a propellant to the feed aperture (5) of the injection moulding tool (10, 11);
(d) continuous further feeding of the melt containing a propellant of the thermoplastic in a quantity that is sufficient to fill the tool completely with the plastic material due to the foaming effect of the propellant and the general cooling of the melt; and
(e) when both tool halves are opened, demoulding and ejecting the filter element (1) from both tool halves.

2. Method according to claim 1, **characterised in that** determining the round contour (9) and the location of a feed aperture (5) for the melt containing a propellant in step (a) takes place by way of simulating the flow behaviour of the melt while taking into consideration the type of melt containing a propellant and its viscosity, as well as the design of the grid structure (4).

3. Method according to claim 2, **characterised in that**, when taking the design of the grid structure into consideration, it is assumed that in the grid structure, two groups (12, 13) of grid lines, which are parallel in each case, cut through an angle α of essentially 90° and the two grid lines (12, 13) are in each case webs with a web spacing A (14) in the range of 0.05 to 0.5 mm, with a web width B (15) in the range of 0.2 to 1 mm and with a web height C (16) in the range of 0.3 to 1.5 mm.

4. Method according to one of claims 1 to 3, **characterised in that** the quantity of propellant used ranges from 0.05 to 6 % w/w, relative to the melt containing a propellant.

5. Method according to one of claims 1 to 4, **characterised in that** a temperature control facility is not used.

6. Household appliance with a single-piece filter element (1) produced from a plastic material by the method according to at least one of claims 1-5, wherein the single-piece filter element (1) has a filter (3) surrounded by a frame (2) with a round contour (9) and the single-piece filter element (1) is obtainable by way of thermoplastic foam injection moulding a melt, containing a propellant, of a thermoplastic.

7. Household appliance according to claim 6, **characterised in that** the thermoplastic foam injection moulding is carried out such that the melt containing a propellant then forms the filter (3) completely, before the frame (2) is then formed with the plastic melt containing a propellant.

8. Household appliance according to claim 6 or 7, **characterised in that** the filter (3) has a grid structure (4) with two groups (12, 13) of grid lines, which are parallel in each case.

9. Household appliance according to claim 8, **characterised in that** the two groups (12, 13) of grid lines, which are parallel in each case, cut through an angle α of essentially 90°.

10. Household appliance according to claim 8 or 9, **characterised in that** the grid lines (12, 13) of both groups are in each case webs with a web spacing A (14) in the range of 0.05 to 0.5 mm, with a web width B (15) in the range of 0.2 to 1 mm and with a web height C (16) in the range of 0.3 to 1.5 mm.

11. Household appliance according to one of claims 6 to 10, **characterised in that** the round contour (9) is a rounded rectangle with convex corners (17).

12. Household appliance according to one of claims 6 to 11, **characterised in that** the filter (3) has a maximum dimension dₘₐₓ in a first direction (18) and a minimum dimension dₘᵢₙ < dₘₐₓ in a second direction (19), wherein the first direction (18) and the second direction (19) form an angle β in the range of 40° to 50°.

13. Household appliance according to claim 12, **characterised in that** the first direction (18) is essentially parallel to a group of parallel grid lines (12, 13) of a grid structure (4) of the filter (3).

14. Household appliance according to one of claims 6 to 13, **characterised in that** the thermoplastic is polypropylene.

15. Household appliance according to one of claims 6 to 14, **characterised in that** it is a dryer or washer dryer, and the filter element (1) therein is a lint filter.

## Revendications

1. Procédé de fabrication d'un élément filtrant monobloc (1) en un matériau plastique pour un appareil ménager, dans lequel l'élément filtrant monobloc (1) comprend un filtre (3) entouré par un cadre (2) présentant un contour arrondi (9) et l'élément filtrant monobloc (1) peut être obtenu par moulage par injection de mousse thermoplastique d'une masse fondue contenant un agent moussant d'une matière thermoplastique, **caractérisé par** les étapes suivantes :
a) détermination du contour arrondi (9) et de l'emplacement d'une ouverture d'alimentation (5) de la masse fondue contenant un agent moussant, dans lequel le contour arrondi (9) et l'ouverture d'alimentation (5) sont adaptés à la masse fondue de la matière thermoplastique de manière à ce que l'alimentation de la masse fondue puisse s'effectuer essentiellement simultanément d'une partie filtre (10) dans une partie cadre (11) d'un outil de moulage par injection,
b) fourniture d'un outil de moulage par injection (10, 11) pouvant être fermé de manière réversible, comprenant deux moitiés d'outil, reproduisant le contour arrondi déterminé (9) et l'emplacement déterminé d'une ouverture d'alimentation (5) pour la masse fondue contenant un agent moussant, dans lequel les deux moitiés d'outil comprennent la partie filtre (10) pour la fabrication du filtre (1) et la partie cadre (11) pour la fabrication du cadre (2) et forment une cavité fermée, à l'exception de l'ouverture d'alimentation (5) disposée dans la partie filtre (10) de l'outil, dont les dimensions extérieures correspondent essentiellement à celles de l'élément filtrant (1),
c) introduction, au niveau de l'ouverture d'alimentation (5) de l'outil de moulage par injection (10, 11), de la masse fondue contenant un agent moussant de la matière thermoplastique,
d) poursuite de l'alimentation en continu de la matière fondue contenant un agent moussant de la matière thermoplastique en une quantité qui suffit, du fait de l'effet moussant de l'agent moussant et du refroidissement progressif de la matière fondue, pour remplir l'outil entièrement avec le matériau plastique, et
e) par ouverture des deux moitiés d'outil, démoulage et éjection de l'élément filtrant (1) à partir des deux moitiés d'outil.

2. Procédé selon la revendication 1, **caractérisé en ce que** la détermination du contour arrondi (9) et de l'emplacement d'une ouverture d'alimentation (5) pour la masse fondue contenant un agent moussant dans l'étape a) s'effectue par simulation du comportement à l'écoulement de la masse fondue en tenant compte du type de masse fondue contenant un agent moussant et de sa viscosité ainsi que de la configuration de la structure maillée (4).

3. Procédé selon la revendication 2, **caractérisé en ce que**, pour prendre en compte la configuration de la structure maillée, on considère que, dans la structure maillée, deux groupes (12, 13) de lignes de grille respectivement parallèles se coupent selon un angle α sensiblement de 90° et les deux lignes de grille (12, 13) sont respectivement des barrettes présentant un intervalle entre barrettes A (14) de 0,05 mm à 0,5 mm, une largeur de barrette B (15) de 0,2 à 1 mm et une hauteur de barrette C (16) de 0,3 à 1,5 mm.

4. Procédé selon l'une des revendications 1 à 3, **caractérisé en ce que** l'agent moussant est utilisé dans une quantité de 0,5 à 6 % en poids, rapportée à la masse fondue contenant un agent moussant.

5. Procédé selon l'une des revendications 1 à 4, **caractérisé en ce qu'**aucun dispositif d'équilibrage de température n'est utilisé.

6. Appareil ménager comprenant un élément filtrant monobloc (1) fabriqué au moyen du procédé selon au moins l'une des revendications 1 à 5 en un matériau plastique, dans lequel l'élément filtrant monobloc (1) comprend un filtre (3) entouré par un cadre (2) présentant un contour arrondi (9) et l'élément filtrant monobloc (1) peut être obtenu par moulage par injection de mousse thermoplastique d'une masse fondue contenant un agent moussant d'une matière thermoplastique.

7. Appareil ménager selon la revendication 6, **caractérisé en ce que** le moulage par injection de mousse thermoplastique est exécuté de sorte que la masse fondue contenant un agent moussant forme d'abord entièrement le filtre (3), avant de former ensuite le cadre (2) avec la masse fondue contenant un agent moussant.

8. Appareil ménager selon la revendication 6 ou 7, **caractérisé en ce que** le filtre (3) comprend une structure maillée (4) comprenant deux groupes (12, 13) de lignes de grille respectivement parallèles.

9. Appareil ménager selon la revendication 8, **caractérisé en ce que** les deux groupes (12, 13) de lignes de grille respectivement parallèles se coupent selon un angle α sensiblement de 90°.

10. Appareil ménager selon la revendication 8 ou 9, **caractérisé en ce que** les lignes de grille (12, 13) des deux groupes sont respectivement des barrettes présentant un intervalle entre barrettes A (14) de 0,05 mm à 0,5 mm, une largeur de barrette B (15) de 0,2 à 1 mm et une hauteur de barrette C (16) de 0,3 à 1,5 mm.

11. Appareil ménager selon l'une des revendications 6 à 10, **caractérisé en ce que** le contour arrondi (9) est un rectangle arrondi ayant des coins convexes (17).

12. Appareil ménager selon l'une des revendications 6 à 11, **caractérisé en ce que** le filtre (3) a une dimension maximale dₘₐₓ dans une première direction (18) et une dimension minimale dₘᵢₙ < dₘₐₓ dans une deuxième direction (19), dans lequel la première direction (18) et la deuxième direction (19) forment un angle β de 40° à 50°.

13. Appareil ménager selon la revendication 12, **caractérisé en ce que** la première direction (18) est essentiellement parallèle à un groupe de lignes de grille parallèles (12, 13) d'une structure maillée (4) du filtre (3).

14. Appareil ménager selon l'une des revendications 6 à 13, **caractérisé en ce que** la matière thermoplastique est du polypropylène.

15. Appareil ménager selon l'une des revendications 6 à 14, **caractérisé en ce qu'**il s'agit d'un sèche-linge ou d'un lave-linge séchant et l'élément filtrant (1) à l'intérieur de celui-ci est un filtre à peluches.
